# EUROPÄISCHE PATENTSCHRIFT

(11) **EP 0 980 134 B1**
(45) Veröffentlichungstag und Bekanntmachung des Hinweises auf die Patenterteilung: **03.10.2007**
(21) Anmeldenummer: 98810764.5
(22) Anmeldetag: 10.08.1998
(51) Int. Cl.: H02M 5/458, H02H 7/12

(54) **Verfahren zum Schutz eines Hochleistungsstromrichters sowie Schutzanordnung zur Durchführung des Verfahrens**
Method of protecting a high power converter and protection device for implementing the method
Procédé pour protéger un convertisseur de haute puissance et dispositif de protection pour la mise en oeuvre de ce procédé

(43) Veröffentlichungstag der Anmeldung: 16.02.2000
(73) Patentinhaber: Bombardier Transportation GmbH, 13627 Berlin (DE)
(72) Erfinder: Enzensberger, Gernot, 5430 Wettingen (CH); Herbst, Ingo, Dr., 8606 Greifensee (CH); Umbricht, Stefan, 5417 Untersiggenthal (CH)
(74) Vertreter: Thielmann, Andreas

(56) Entgegenhaltungen:
- DE-A- 19 626 528
- US-A- 4 672 525
- BLAABJERG F ET AL: "AN INTEGRATED HIGH POWER FACTOR THREE-PHASE AC-DC-AC CONVERTER FOR AC-MACHINES IMPLEMENTED IN ONE MICROCONTROLLER" PROCEEDINGS OF THE ANNUAL POWER ELECTRONICS SPECIALISTS CONFERENCE (PESC), SEATTLE, JUNE 20 - 25, 1993, Nr. CONF. 24, 20. Juni 1993, Seiten 285-292, XP000399459 INSTITUTE OF ELECTRICAL AND ELECTRONICS ENGINEERS

## Beschreibung

### TECHNISCHES GEBIET

Die vorliegende Erfindung bezieht sich auf das Gebiet der Leistungselektronik. Sie betrifft ein Verfahren zum Schutz eines Hochleistungsstromrichters, welcher Hochleistungsstromrichter einen Netzstromrichter umfasst, der eine Wechselspannung aus einem Netz in eine Gleichspannung umwandelt und an einen mit einer Zwischenkreiskapazität ausgestatteten Gleichspannungszwischenkreis abgibt, und welcher einen zweiten Stromrichter umfasst, der die Gleichspannung aus dem Gleichspannungszwischenkreis in eine Wechselspannung umwandelt, wobei jeder der Stromrichter in Brückenschaltung aufgebaut ist und jeweils eine Mehrzahl von in Brückenzweigen paarweise angeordneten IGBTs enthält.

### STAND DER TECHNIK

Für Motorantriebe von elektrischen Bahnen aber auch in anderen Anwendungen werden seit längerem Hochleistungsstromrichter eingesetzt, die zwei Stromrichter umfassen, die durch einen Gleichspannungszwischenkreis miteinander verbunden sind. Der erste Stromrichter arbeitet als Netzstromrichter und wandelt die aus einem Wechselspannungsnetz entnommene Wechselspannung einer ersten Frequenz in eine Gleichspannung um, die auf den Gleichspannungszwischenkreis gegeben wird. Der zweite Stromrichter, der Motorstromrichter, wandelt die Gleichspannung aus dem Gleichspannungszwischenkreis in eine Wechselspannung einer zweiten, auch veränderbaren Frequenz um, die dann zur Versorgung eines Motors verwendet wird. Derartige Wechselspannungs-Motorantriebe sind z.B. aus der Druckschrift US-A-4,959,602 bekannt.

Sowohl der Netzstromrichter als auch der Motorstromrichter sind üblicherweise mit abschaltbaren Leistungshalbleitern (GTOs oder IGBTs) bestückt, die paarweise in Brückenzweigen angeordnet und zu einer Brückenschaltung zusammengeschaltet sind. Ein Beispiel für einen mit GTOs bestückten Motorstromrichter ist in der US-A-4,672,525 wiedergegeben. Ein Beispiel für einen mit IGBTs bestückten Motorstromrichter findet sich in der US-A-5,592.371 oder in Blaabjerg F. et al: "An Integrated High Power Factor Three-phase AC-DC-AC Converter for AC-machines Implemented in one Microcontroller" Proceedings of the annual Power Electronics Specialists Conference (PESC), Seattle, June 20 - 25, 1993, Nr. Conf. 24, 20. June 1993 (1993-06-20), Seiten 285-292.

Im Normalbetrieb sind die Schalterpaare in den Brückenzweigen der Stromrichter nie gleichzeitig durchgeschaltet. Es kann jedoch in Störfällen dazu kommen, dass beide Schalter eines Brückenzweigpaares unbeabsichtigt durchgehend leitend werden. Der Brückenzweig stellt dann für die anliegende Gleichspannung einen Kurzschluss dar, der einen hohen Kurzschlussstrom durch den Brückenzweig zur Folge hat. Zur Beherrschung dieses Störfalles ist in der oben erwähnten Druckschrift US-A-4,672,525 für einen aus einem Gleichspannungsnetz betriebenen Motorstromrichter vorgeschlagen worden, die mit GTOs bestückten Brückenzweige des Motorstromrichters einzeln auf einen Kurzschluss (Durchschalten beider GTOs des Zweiges) zu überwachen, und im Falle eines Kurzschlusses in einem Brückenzweig die übrigen Brückenzweige gezielt ebenfalls durchzuschalten.

Durch eine solche Schutzdurchzündung wird der fliessende Kurzschlussstrom auf mehrere Brückenzweige und Schaltelemente verteilt, so dass eine Beschädigung der einzelnen Bauelemente (GTOs) in der ersten Zeitspanne des Störfalles vermieden werden kann. Anschliessend wird der Stromrichter durch sukzessives Oeffnen eines "high-speed breakers" und eines (relativ trägen) mechanischen Schalters von der Gleichspannung abgekoppelt und so der aus der Gleichspannungsquelle gespeiste Kurzschlussstrom dauerhaft unterbrochen werden (Schutzabschaltung).

In einem Hochleistungsstromrichter mit Gleichspannungszwischenkreis und IGBT als elektronischen Schaltern, wie er bei der vorliegenden Erfindung vorausgesetzt wird, wird wegen der charakteristischen Eigenschaften der IGBT ebenfalls vorteilhaft ein Schutzkonzept mit Schutzabschaltung eingesetzt. Kommt es in einem derartigen Stromrichter unbeabsichtigt zum gleichzeitigen Leiten der elektronischen Schalter eines Zweigpaares, so entlädt sich zunächst der Zwischenkreiskondensator über die mit Ihm in Reihe geschalteten Schutzelemente teilweise oder ganz und zerstört die elektronischen Schalter mehr oder weniger. Nach dieser stossartigen Entladung des Zwischenkreises im Bereich einer Millisekunde ist der Zwischenkreis kurzgeschlossen, aber die Zwischenkreiskondensatoren sind je nach Art der mit Ihnen in Serie geschalteten Schutzelemente eventuell nicht vollständig entladen. Die nun über die noch intakten Stromrichterzweigpaare aus dem Netz und dem Motor (der Last) in das kurzgeschlossene und teilweise zerstörte Zweigpaar fliessenden Kurzschlussströme können das Ausmass von dessen Zerstörung erheblich vergrössern und zu ernsthaften Schäden in der Umgebung dieses Zweigpaares führen.

### DARSTELLUNG DER ERFINDUNG

Es ist daher Aufgabe der Erfindung, ein Verfahren zum Schutz eines Hochleistungsstromrichters mit Gleichspannungszwischenkreis und IGBT als elektronischen Schaltern zu schaffen, mit welchem beim Kurzschluss eines Zweigpaares das kurzgeschlossene Zweigpaar von den aus Netz und Last kommenden Kurzschlussströmen entlastet wird, sowie eine Schutzschaltung zur Durchführung des Verfahrens anzugeben.

Die Aufgabe wird durch die Gesamtheit der Merkmale der unabhängigen Ansprüche 1 und 5 gelöst. Der Kern der Erfindung besteht darin, im Kurzschlussfall eines Brückenzweiges eine Entlastungsdurchzündung mehrerer, insbesondere aller, anderen Brückenzweige durchzuführen. Eine solche Entlastungsdurchzündung ist im Falle des Stromrichters mit Gleichspannungszwischenkreis und IGBT als Schaltelementen nur deshalb möglich und sinnvoll, weil die Kapazität des Gleichspannungszwischenkreises bereits weitgehend durch die vorhergehende stossartige Entladung entleert ist und daher eine Beschädigung der im Rahmen der Entlastungsdurchzündung durchgeschalteten Brückenzweige nicht zu befürchten ist.

Eine bevorzugte Ausführungsform des Verfahrens nach der Erfindung ist dadurch gekennzeichnet, dass die Zwischenkreisspannung des Gleichspannungszwischenkreises fortlaufend gemessen wird, und dass die anderen Brückenzweige gezielt durchgesteuert werden, wenn im Normalbetrieb des Hochleistungsstromrichters die Zwischenkreisspannung unter eine vorgegebene Schwellenspannung abfällt. Die Steuerung der Entlastungsdurchzündung durch die Zwischenkreisspannung hat den Vorteil, dass die Brückenzweige nicht einzeln auf Kurzschluss überwacht werden müssen, und dass die Entlastungsdurchzündung wirklich erst dann einsetzt, wenn die Ladung in den Zwischenkreiskapazitäten bereits auf ein für die durchzuzündenden Brückenzweige unschädliches Mass abgebaut ist.

Die sichere Funktion der Entlastungsdurchzündung wird gemäss einer vorteilhaften Weiterentwicklung dieser Ausführungsform dadurch gewährleistet, dass die Ueberwachung der Zwischenkreisspannung redundant erfolgt. Beim Ausfall einer Ueberwachungseinrichtung kann der Schutz dann von einer anderen Ueberwachungseinrichtung übernommen werden.

Um eine unbeabsichtigte Entlastungsdurchzündung in dem Fall zu vermeiden, dass der Zwischenkreis auf reguläre Weise entladen und so die vorgegebene Schwellenspannung unterschritten wird, werden, wenn eine Möglichkeit zur regulären Entladung des Gleichspannungszwischenkreises besteht, die anderen Brückenzweige bei Unterschreiten der Schwellenspannung nur dann durchgesteuert, wenn nicht gleichzeitig eine reguläre Entladung des Gleichspannungszwischenkreises eingeleitet ist.

Die erfindungsgemässe Schutzanordnung zur Durchführung des Verfahrens ist dadurch gekennzeichnet, dass im Gleichspannungszwischenkreis des Hochleistungsstromrichters eine Spannungsmesseinrichtung zur Messung der Zwischenkreisspannung angeordnet ist, dass an die Spannungsmesseinrichtung erste Mittel zum Vergleich der gemessenen Zwischenkreisspannung mit einer vorgegebenen Schwellenspannung angeschlossen sind, und dass die Vergleichsmittel mit einer Steuerung für die Stromrichter in Wirkverbindung stehen.

Eine erste bevorzugte Ausführungsform der erfindungsgemässen Anordnung zeichnet sich dadurch aus, dass die Spannungsmesseinrichtung zum Erzielen einer Redundanz bei der Messung eine Mehrzahl von, insbesondere drei, parallel arbeitende(n) Spannungsmesser(n) umfasst.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem vereinfachten Blockschaltbild einen Hochleistungsstromrichter mit Gleichspannungszwischenkreis und IGBTs sowie einer Schutzanordnung gemäss einem bevorzugten Ausführungsbeispiel der Erfindung; und
- Fig. 2: den zeitlichen Verlauf ausgewählter Parameter bei der Entlastungsdurchzündung in einer Anordnung nach Fig. 1.

### WEGE ZUR AUSFÜHRUNG DER ERFINDUNG

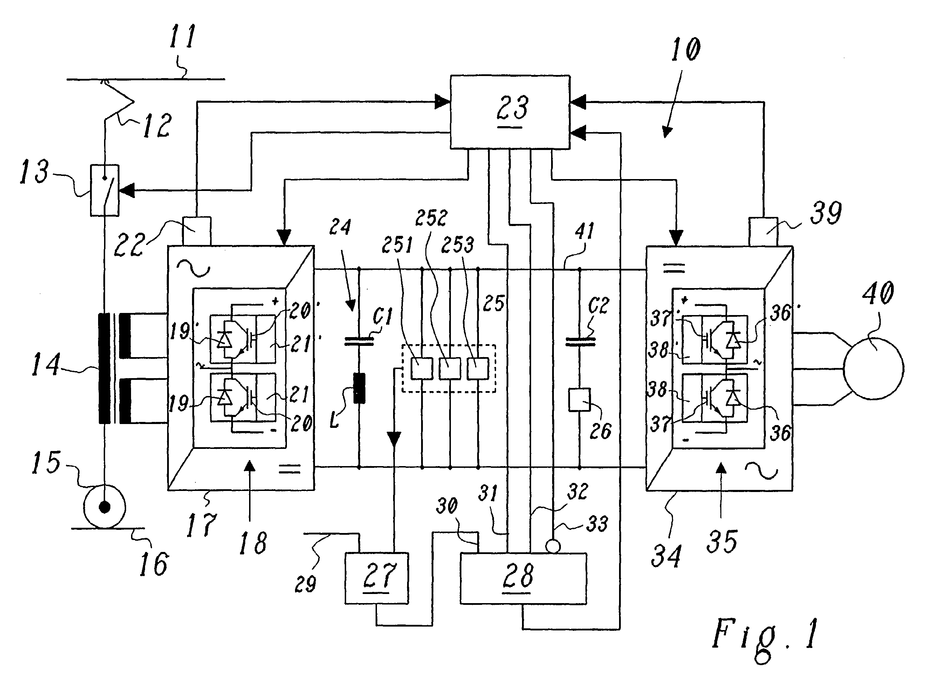

In Fig. 1 ist in einem vereinfachten Blockschaltbild einen Hochleistungsstromrichter mit Gleichspannungszwischenkreis und IGBTs sowie einer Schutzanordnung gemäss einem bevorzugten Ausführungsbeispiel der Erfindung wiedergegeben. Der Hochleistungsstromrichter 10 ist für die Ansteuerung bzw. Versorgung eines Motors 40 einer Bahn (z.B. einer E-Lok) vorgesehen. Der Hochleistungsstromrichter 10 bezieht die Spannung als Wechselspannung aus einem Bahnnetz über einen Fahrdraht 11 und eine Schiene 16. Die Verbindung zum Fahrdraht 11 wird über einen Schutzschalter 13 durch einen Stromabnehmer 12 hergestellt, die Verbindung zur Schiene 16 über ein Rad 15. Die aus dem Bahnnetz abgenommene Wechselspannung wird über einen Netztransformator 14 dem Eingang eines Netzstromrichters 17 zugeführt. Der Netzstromrichter 17 ist als Brückenschaltung mit mehreren (im vorliegenden Fall zwei) Brückenzweigen 18 aufgebaut. Jeder der Brückenzweige 18 enthält ein Paar IGBTs 20, 20', denen jeweils eine Diode 19 bzw. 19' antiparallel geschaltet ist. Jeder IGBT 20, 20' wird durch eine Ansteuereinheit (gate unit) 21 bzw. 21' angesteuert.

Der Netzstromrichter 17 wandelt die Wechselspannung aus dem Bahnnetz durch entsprechendes Ansteuern der IGBTs in den Brückenzweigen 18 in eine Gleichspannung um, die ausgangsseitig auf einen Gleichspannungszwischenkreis 41 gegeben wird. Der Gleichspannungszwischenkreis 41 umfasst je nach Ausgestaltung verschiedene Kreiselemente, die unter anderem Kondensatoren enthalten. In der Darstellung der Fig. 1 sind beispielhaft als Kreiselemente ein Saugkreis 24 mit einer Serieschaltung aus einem Saugkreiskondensator C1 und einer Induktivität L sowie ein Stützkondensator C2 mit einem in Serie liegenden Strombegrenzer 26 wiedergegeben. Andere Kreiselemente wie z.B. Spannungsbegrenzer oder dgl. können ebenfalls vorhanden sein.

Die am Gleichspannungszwischenkreis 41 anliegende Zwischenkreisspannung gelangt auf den Eingang eines Motorstromrichters 34, der - ähnlich wie der Netzstromrichter 17 - als Brückenschaltung mit einer Mehrzahl von Brückenzweigen 35 aufgebaut ist. In jedem Brückenzweig 35 sind auch hier wieder Paare von IGBTs 37, 37' mit antiparallelen Dioden 36, 36' und Ansteuereinheiten 38, 38' als Schaltelemente eingesetzt. Der Motorstromrichter 34 erzeugt aus der Gleichspannung des Gleichspannungszwischenkreises 41 eine 3-phasige Wechselspannung, mit welcher der Motor 40 versorgt wird.

Die Ansteuerung der Stromrichter 17 und 34 erfolgt im Normalbetrieb aus einer Steuerung 23, welche die entsprechenden Befehle an die Ansteuereinheiten 21, 21' bzw. 38, 38' der einzelnen IGBTs in den Brückenzweigen gibt. Gleichzeitig sind an jedem der Stromrichter 17, 34 Schaltzustandsrückmeldungseinheiten 22 bzw. 39 vorgesehen, die bei Vorliegen eines Störfalles in den Stromrichtern entsprechende Signale an die Steuerung 23 abgeben, die ihrerseits eine Schutzabschaltung über den Schutzschalter 13 veranlasst.

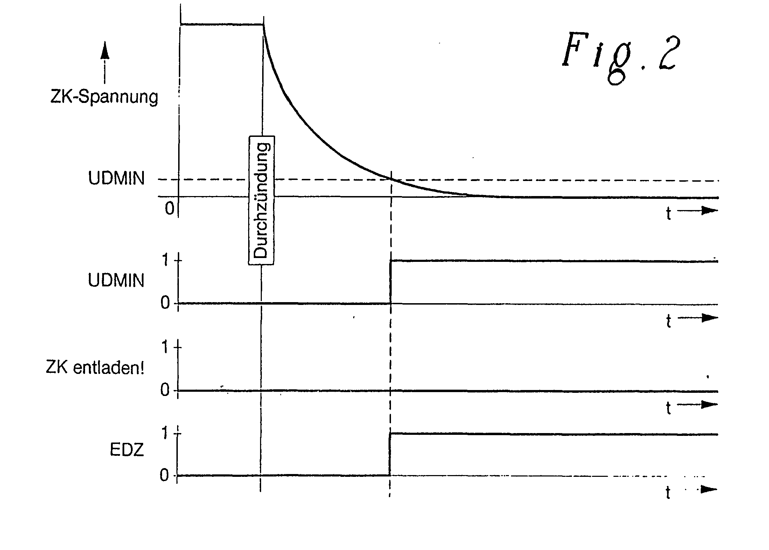

Die Steuerung 23 steuert zugleich die Entlastungsdurchzündung der unbeschädigten Brückenzweige im Falle eines unbeabsichtigten Kurzschlusses in einem der Brückenzweige. Tritt ein solcher Kurzschlussfall auf, entlädt sich der Stützkondensator C2 stossartig über den Strombegrenzer und den kurzgeschlossenen Brückenzweig, der in einem der Stromrichter 17 oder 34 lokalisiert sein kann. Die Zwischenkreisspannung (ZK-Spannung), die von einer redundanten Spannungsmesseinrichtung 25 mit drei unabhängigen, parallel arbeitenden Spannungsmessern 251, 252 und 253 gemessen und überwacht wird, fällt dann gemäss dem in Fig. 2 dargestellten oberen Kurvenverlauf innerhalb einer sehr kurzen Zeitpanne (ca. 1 ms) auf einen Wert unterhalb einer vorgegebenen Schwellenspannung UDMIN ab. Dieses Unterschreiten der Schwellenspannung UDMIN wird dadurch detektiert, dass die gemessene Zwischenkreisspannung auf einen Eingang eines Komparators 27 gegeben wird, an dessen anderen Eingang 29 die Schwellenspannung UDMIN anliegt. Wird dieser Wert unterschritten, springt der Ausgang des Komparators 27 von logisch "0" auf logisch "1" (zweiter Kurvenverlauf von oben in Fig. 2). Sind im Augenblick des Umspringens weitere Bedingungen erfüllt, wird damit das Signal zur Auslösung der Entlastungsdurchzündung gegeben.

Eine dieser weiteren Bedingungen ist das Fehlen einer regulären Entladung des Gleichspannungszwischenkreises (die ja ebenfalls zu einem Unterschreiten der Schwellenspannung UDMIN führen würde). Ist ein entsprechender Befehl (ZK entladen!) nicht vorhanden (dritter Kurvenverlauf von oben in Fig. 2 auf logisch "0"), kann grundsätzlich eine Entlastungsdurchzündung (EDZ) eingeleitet werden (untere Kurve in Fig. 2). Schaltungsmässig wird in Fig. 1 die Abfrage dieser Bedingung beispielhaft durch ein UND-Glied 28 verwirklicht, auf dessen einen Eingang 30 das Ausgangssignal des Komparators 27 gegeben wird, und das einen weiteren, invertierenden Eingang 33 aufweist, auf den das (z.B. aus der Steuerung 23 stammende) Signal für die reguläre Entladung des Gleichspannungszwischenkreises (ZK entladen!) gegeben wird. Die Auflösung der Entlastungsdurchzündung (EDZ) erfolgt später nach einer festeingestellten, aber frei programmierbaren Zeit.

Als weitere Bedingungen, die an weiteren Eingängen 31 und 32 des UND-Gliedes 28 anliegen, kommt die Taktfreigabe für die Stromrichter 17, 34 sowie eine generelle Freigabe für die Entlastungsdurchzündung in Frage, die beide ebenfalls aus der Steuerung 23 stammen und an das UND-Glied 28 weitergeleitet werden. Diese Bedingungen sind in Fig. 2 der Übersichtlichkeit wegen nicht gezeigt. Selbstverständlich können diese Bedingungen und Entscheidungen auch in einem Rechner, der innerhalb der Steuerung 23 angeordnet ist, durch eine entsprechende Software realisiert werden.

Insgesamt ergibt sich mit der Erfindung ein Schutzverfahren und eine Schutzanordnung für einen Hochleistungsstromrichter, die einfach in der lmplementierung sind und im Kurzschlussfall einen sicheren Schutz vor weitergehenden Schäden bieten.

### BEZUGSZEICHENLISTE

- 10: Hochleistungsstromrichter
- 11: Fahrdraht
- 12: Stromabnehmer
- 13: Schutzschalter
- 14: Netztransformator
- 15: Rad
- 16: Schiene
- 17: Netzstromrichter
- 18: Brückenzweig
- 19,19': Diode
- 20,20': IGBT
- 21,21': Ansteuereinheit
- 22: Schaltzustandsrückmeldungseinheit
- 23: Steuerung
- 24: Saugkreis
- 25: Spannungsmesseinrichtung
- 251,..,253: Spannungsmesser
- 26: Strombegrenzer
- 27: Komparator
- 28: UND-Glied
- 29: Eingang für die Schwellenspannung
- 30,..,33: Eingang (UND-Glied 28)
- 34: Motorstromrichter
- 35: Brückenzweig
- 36,36': Diode
- 37,37': IGBT
- 38,38': Ansteuereinheit
- 39: Schaltzustandsrückmeldungseinheit
- 40: Motor
- 41: Gleichspannungszwischenkreis
- C1: Saugkreiskondensator
- C2: Stützkondensator
- L: Induktivität
- UDMIN: Schwellenspannung

## Patentansprüche

1. Verfahren zum Schutz eines Hochleistungsstromrichters (10), welcher Hochleistungsstromrichter (10) einen Netzstromrichter (17) umfasst, der eine Wechselspannung aus einem Netz in eine Gleichspannung umwandelt und an einen mit einer Zwischenkreiskapazität (C2) ausgestatteten Gleichspannungszwischenkreis (41) abgibt, und welcher einen zweiten Stromrichter (34) umfasst, der die Gleichspannung aus dem Gleichspannungszwischenkreis (41) in eine Wechselspannung umwandelt, wobei jeder der Stromrichter (17, 34) in Brückenschaltung aufgebaut ist und jeweils eine Mehrzahl von in Brückenzweigen (18, 35) paarweise angeordneten IGBTs (20, 37) enthält, **dadurch gekennzeichnet, dass** bei einer zerstörerischen Entladung der Zwischenkreiskapazität (C2) über einen der Brückenzweige (18, 35), welcher unbeabsichtigt durchgehend leitend geworden ist, zur Begrenzung der Zerstörungen andere Brückenzweige in den Stromrichtern (17, 34) in Form einer Entlastungsdurchzündung gezielt durchgesteuert werden, wobei eine Zwischenkreisspannung des Gleichspannungszwischenkreises (41) im Gleichspannungszwischenkreis (41) fortlaufend gemessen wird, und die anderen Brückenzweige gezielt durchgesteuert werden, wenn im Normalbetrieb des Hochleistungsstromrichters (10) die gemessene Zwischenkreisspannung unter eine vorgegebene Schwellenspannung (UDMIN) abfällt.

2. Verfahren nach Anspruch 1, **dadurch gekennzeichnet, dass** alle übrigen Brückenzweige gezielt durchgesteuert werden.

3. Verfahren nach einem der Ansprüche 1 und 2, **dadurch gekennzeichnet, dass** die Ueberwachung der Zwischenkreisspannung redundant erfolgt.

4. Verfahren nach einem der Ansprüche 1 bis 3, **dadurch gekennzeichnet, dass** eine Möglichkeit zur regulären Entladung des Gleichspannungszwischenkreises (41) besteht, und dass die anderen Brückenzweige bei Unterschreiten der Schwellenspannung (UDMIN) nur dann durchgesteuert werden, wenn nicht gleichzeitig eine reguläre Entladung des Gleichspannungszwischenkreises (41) eingeleitet ist.

5. Schutzanordnung zur Durchführung des Verfahrens nach einem der Ansprüche 1 bis 4, **dadurch gekennzeichnet, dass** im Gleichspannungszwischenkreis (41) des Hochleistungsstromrichters (10) eine Spannungsmesseinrichtung (25) zur Messung der Zwischenkreisspannung angeordnet ist, dass an die Spannungsmesseinrichtung (25) erste Mittel (27) zum Vergleich der gemessenen Zwischenkreisspannung mit der vorgegebenen Schwellenspannung (UDMIN) angeschlossen sind, und dass die Vergleichsmittel (27) mit einer Steuerung (23) für die Stromrichter (17, 34) in Wirkverbindung stehen.

6. Schutzanordnung nach Anspruch 5, **dadurch gekennzeichnet, dass** die Spannungsmesseinrichtung (25) zum Erzielen einer Redundanz bei der Messung eine Mehrzahl von, insbesondere drei, parallel arbeitende(n) Spannungsmesser(n) (251, 252, 253) umfasst.

7. Schutzanordnung nach einem der Ansprüche 5 und 6, **dadurch gekennzeichnet, dass** die Schutzanordnung zweite Mittel (28) umfasst, welche eine Entlastungsdurchzündung verhindern, wenn der Gleichspannungszwischenkreis (41) regulär entladen wird.

## Claims

1. Method for protecting a high-power converter (10), which comprises a mains converter (I7), which converts an alternating current from a power supply system into a direct voltage and delivers it to an intermediate DC circuit (41), equipped with an intermediate circuit capacitance (C2), and which comprises a second current converter (34), which converts the DC voltage from the intermediate DC circuit (41) into an AC voltage, each of the current converters (17, 34) being constructed in a bridge circuit and, in each case, containing a plurality of IGBTs (20, 37) disposed in pairs in bridge arms (18, 35), **characterized in that**, in the case of a destructive discharge of the intermediate circuit capacitance (C2) over one of the bridge arms (18, 35), which has unintentionally become conductive, to limit the destruction, other bridge arms in the current converters (17, 34) are selectively turned on in the form of a discharge arc-through, an intermediate circuit voltage of the intermediate DC circuit (41) being measured continuously in the intermediate voltage circuit (41), and the other bridge arms are turned on selectively if, in the normal operation of the high-power converter (10), the measured intermediate circuit voltage drops below a specified threshold voltage (UDMIN).

2. The method according to claim 1, **characterized in that** all remaining bridge arms are turned on selectively.

3. The method according to one of the claims 1 and 2, **characterized in that** the monitoring of the intermediate circuit voltage is carried out redundantly.

4. The method according to anyone of claims 1 to 3, **characterized in that** a possibility exists for discharging the intermediate DC circuit (41) regularly, and **in that**, in the event that the voltage drops below the threshold value (UDMIN), the other bridge arms are turned on only if a regular discharge of the intermediate DC circuit (41) is not initiated simultaneously.

5. Protective arrangement for carrying out the method according to anyone of the claims 1 to 4, **characterized in that** a voltage measuring device (25) for measuring the voltage of the intermediate circuit is disposed in the intermediate DC circuit (41) of the high-power converter (10), **in that** first means (27) for comparing the measured intermediate circuit voltage with the specified threshold voltage (UDMIN) are connected to the voltage measuring device (25) and that the comparison means (27) are in active connection with a control system (23) for the current converter (17, 34).

6. The protective arrangement according to claim 5, **characterized in that** the voltage measuring device (25), for achieving a redundancy for the measurement, comprises a plurality of voltage meters (251, 252, 253), especially three more, working in parallel.

7. The protective arrangement according to anyone of the claims 5 and 6, **characterized in that** the protective arrangement comprises second means (28), which prevent a discharge arc-through if the intermediate DC circuit (41) is discharged regularly.

## Revendications

1. Procédé de protection d'un convertisseur de grande puissance (10), lequel convertisseur de grande puissance (10) comprend un convertisseur de puissance par réseau (17), qui transforme une tension alternative provenant d'un secteur en une tension continue et qui la délivre à un circuit intermédiaire de tension continue (41) doté d'une capacité de circuit intermédiaire (C2), et lequel comprend un second convertisseur (34) qui transforme la tension continue provenant du circuit intermédiaire de tension continue (41) en une tension alternative, moyennant quoi chacun des convertisseurs (17, 34) est monté en pont et comporte une pluralité d'IGBT (20, 37) agencés par paire dans des branches du pont (18, 35), **caractérisé en ce que** lors d'une décharge destructive de la capacité de circuit intermédiaire (C2) sur une branche de pont (18, 35), laquelle est devenue non intentionnellement en permanence conductrice, d'autres branches de pont sont actionnées de manière sélective dans les convertisseurs (17, 34) sous la forme d'un raté de blocage de décharge afin de limiter les destructions, moyennant quoi une tension de circuit intermédiaire du circuit intermédiaire de tension continue (41) est mesurée en continu dans le circuit intermédiaire de tension continue (41), et les autres branches de pont sont actionnées de manière sélective lorsque la tension de circuit intermédiaire mesurée chute au-dessous d'une tension de seuil prédéterminée (UDMIN) lorsque le convertisseur de grande puissance (10) est en mode de fonctionnement normal.

2. Procédé selon la revendication 1, **caractérisé en ce que** toutes les autres branches de pont sont actionnées de manière sélective.

3. Procédé selon l'une quelconque des revendications 1 et 2, **caractérisé en ce que** le contrôle de la tension de circuit intermédiaire a lieu de manière redondante.

4. Procédé selon l'une quelconque des revendications 1 à 3, **caractérisé en ce qu'**il existe une possibilité de décharge régulière du circuit intermédiaire de tension continue (41) et **en ce que** les autres branches de pont ne sont actionnées, si la tension de seuil (UDMIN) n'est pas atteinte, que lorsqu'une décharge régulière du circuit intermédiaire de tension continue (41) n'est pas envoyée en même temps.

5. Agencement de protection permettant de réaliser le procédé selon l'une quelconque des revendications 1 à 4, **caractérisé en ce qu'**un dispositif de mesure de la tension (25) est agencé dans le circuit intermédiaire de tension continue (41) du convertisseur de grande puissance (10) afin de mesurer la tension de circuit intermédiaire, **en ce que** des premiers moyens (27) permettant de comparer la tension de circuit intermédiaire mesurée avec la tension de seuil (UDMIN) prédéterminée sont raccordés au dispositif de mesure de tension (25), et **en ce que** les moyens de comparaison (27) sont reliés de manière opérationnelle à un dispositif de commande (23) pour les convertisseurs (17, 34).

6. Agencement de protection selon la revendication 5, **caractérisé en ce que** le dispositif de mesure de la tension (25) comporte une pluralité de voltmètres (251, 252, 253) fonctionnant en parallèle, en particulier trois, afin d'obtenir une redondance lors de la mesure.

7. Agencement de protection selon l'une quelconque des revendications 5 et 6, **caractérisé en ce que** l'agencement de protection comporte des seconds moyens (28) qui empêchent tout raté de blocage de décharge lorsque le circuit intermédiaire de tension continue (41) est déchargé régulièrement.
